**Europäisches Patentamt**

**European Patent Office**

**Office européen des brevets**

(19)

(11) **EP 1 586 466 A1**

(12) **EUROPEAN PATENT APPLICATION**
published in accordance with Art. 158(3) EPC

(43) Date of publication:
**19.10.2005 Bulletin 2005/42**

(51) Int Cl.⁷: **B60C 11/03**, B60C 11/04,
B60C 9/30, B60C 11/01,
B60C 11/00

(21) Application number: **03780704.7**

(22) Date of filing: **10.12.2003**

(86) International application number:
**PCT/JP2003/015807**

(87) International publication number:
**WO 2004/052663 (24.06.2004 Gazette 2004/26)**

(84) Designated Contracting States:
**AT BE BG CH CY CZ DE DK EE ES FI FR GB GR
HU IE IT LI LU MC NL PT RO SE SI SK TR**

(30) Priority: **10.12.2002 JP 2002357937**

(71) Applicant: **Bridgestone Corporation
Tokyo 104-8340 (JP)**

(72) Inventor: **NAGAI, Shu
Chuo-ku, Tokyo 104-8340 (JP)**

(74) Representative: **Whalley, Kevin
Marks & Clerk
90 Long Acre
London WC2E 9RA (GB)**

(54) **PNEUMATIC TIRE**

(57)     An object is to provide a pneumatic tire having an enhanced high-speed durability without deterioration in steering stability. A pneumatic tire 10 includes a belt 14 and a tread section 16 on an outside of a crown part 12C in this order, and has different negative ratios of the tread section 16 between both sides of a tire equatorial plane 10C. A belt width Ba from a belt end 14I on the higher negative ratio side to the tire equatorial plane 10C and a belt width Bb from a belt end 14E on the lower negative ratio side to the tire equatorial plane 10C satisfy a relationship of Ba>Bb. It is thereby possible to efficiently suppress a shoulder section 18 from projecting due to a centrifugal force during high-speed rolling. It is thereby possible to efficiently reduce a strain and a heat generated in a rubber member of the shoulder section 18, and efficiently enhance high-speed durability. Further, by ensuring that a grounding width on an OUT side is equivalent to that of a conventional one, it is possible to prevent deterioration in steering stability.

F I G. 1

EP 1 586 466 A1

**Description**

TECHNICAL FIELD

The present invention relates to a pneumatic tire having different negative ratios of a tread section between both sides of an equatorial plane of the tire.

BACKGROUND ART

An automobile normally has a negative camber so as to enhance straight running ability and controllability in cornering. Many automobile manufacturers conduct camber angle-added high-speed durability drum tests for confirming a high-speed durability of a tire with a negative camber angle applied thereto.

Meanwhile, a conventional pneumatic tire is configured so that a belt provided outside of a carcass is symmetric about an equatorial plane of the tire (that is, laterally symmetric) so as to ensure flexibility under various utilization conditions (see, for example, Japanese Patent Application Laid-Open (JP-A) No. 2002-178713).

If a pneumatic tire 80 is attached to an automobile or the like, a belt width Ba from the equatorial plane to a belt end 86I is smaller than a grounding width Tin from the equatorial plane to a grounding area end on an IN side with respect to the equatorial plane of the tire (that is, the IN-side belt end 86I is located inward of an end TI of the grounding width Tin).

To enhance high-speed durability of such a pneumatic tire, the following measures have been taken: (1) adding a reinforcing layer to a shoulder section near the tread section, (2) reducing a belt angle (an angle with respect to a width direction of the tire), (3) increasing a belt width, (4) reducing a thickness of a sidewall rubber layer, etc.

The conventional pneumatic tire has, however, the following disadvantages. If the high-speed durability of the tire is enhanced while applying a wide negative camber angle to the tire, then deteriorations in a steering stability including an increased elastic force, a deteriorated reaction near a center, and a deteriorated rigidity occur. As a consequence, it is difficult to simultaneously realize high-speed durability and steering stability.

In a high-speed durability test conducted under condition of applying a negative camber angle to a tire on the assumption that the tire is actually attached to the automobile, the heated rubber due to a strain of the tire during grounding is considered to be one of major causes for a failure.

The heated rubber is conspicuously recognized in the shoulder section in the vicinity of the tread section near the IN-side grounding end, in which area a rubber member is peeled off a reinforcing fiber layer, which is one of major failure modes in a high-speed durability test.

One means for suppressing the strain and the heating of the rubber is to increase the belt width. By doing so, it is possible to realize both (1) reducing a projection amount of the shoulder section and a grounding pressure during a high-speed running, and (2) locating a belt end away from a grounding area end that has a heavy load, the belt end having a structural tendency to develop trouble because of a great change in rigidity between a steel belt and the rubber.

However, the increase in the belt width causes an increase in the outer bending rigidity of a tread plane and eventually a decrease in the grounding width. The decrease in the grounding width has adverse influences on the steering stability such as (1) deteriorated sense of grounding and gripping, and (2) increased sense of elasticity and increase in variation in a lateral force. Due to these, it is often difficult to increase the belt width.

Under these circumstances, therefore, it is an object of the present invention to provide a pneumatic tire having an enhanced high-speed durability without deterioration in steering stability.

DISCLOSURE OF THE INVENTION

The inventor of the present invention has paid attention to the fact that there is a distinction between an IN side and an OUT side for a tire having a laterally asymmetric pattern when used. The inventor, therefore, has exerted utmost efforts in providing a structure of the pneumatic tire that satisfies both a high-speed durability and a steering stability using this distinction, and finally has completed the invention.

The invention according to claim 1 is a pneumatic tire sequentially including on an outside of a crown part of a carcass extending in a toroidal fashion a belt and a tread section, which is provided with grooves, and having different negative ratios of the tread section on each of two sides of a tire equatorial plane, wherein a belt width Ba from a belt end on the higher negative ratio side to the tire equatorial plane and a belt width Bb from a belt end on the lower negative ratio side to the tire equatorial plane satisfy a relationship of Ba>Bb.

When this pneumatic tire is attached to an automobile or the like, the pneumatic tire is attached thereto so that the higher negative ratio side becomes an IN side and the lower negative ratio side becomes an OUT side. Accordingly, the belt width Ba on the IN side having the higher negative ratio is larger than the belt width Bb on the OUT side having the lower negative ratio, and the larger belt width can be applied to the IN side.

It is thereby possible to efficiently suppress the shoulder section from projecting due to a centrifugal force during high-speed rolling. Due to this, even if a load on the IN side is particularly creased following application of a negative camber angle, then a strain and a heat generated in a rubber member of the shoulder section can be efficiently reduced, and the high-speed durability can be efficiently enhanced. In addition, by ensuring that the OUT-side grounding width is equivalent to that of the conventional pneumatic tire, the deterioration in the steering stability can be prevented.

Furthermore, when the pneumatic tire is attached to the automobile or the like as stated above, the pneumatic tire is attached thereto under the following conditions: (1) a ratio of the belt width Ba (IN-side belt width) to a grounding width Tin (IN-side grounding width) from the tire equatorial plane to a grounding end inside of a camber satisfy a relationship of $1.0 \leq Ba/Tin \leq 1.1$, and (2) a ratio Bb/Tout of the belt width Bb (OUT-side belt width) to a grounding width Tout from the tire equatorial plane to a grounding end outside of the camber satisfy a relationship of Bb/Tout>Ba/Tin and a relationship of $1.0 < Bb/Tout < 2.0$. If so, even the OUT-side belt end can be located outside of the actual grounding end of the pneumatic tire to which the negative camber angle applied, irrespectively of a change in attitude following a movement of a center of gravity of the vehicle during straight running and cornering. This can contribute to maintaining the high-speed durability. At the same time, setting of the OUT-side belt width within this range contributes to an enhancement in steering performance.

Use of a crossing belt having two or more layers as the belt can facilitate enhancing both the high-speed durability and the steering stability.

According to the invention claimed in claim 2, the belt width Ba and the belt width Bb satisfy a relationship of $1.04 \leq Ba/Bb \leq 1.20$. If so, the advantage according to claim 1 can be easily exhibited.

According to the invention claimed in claim 3, a difference between the negative ratios on each side of the tire equatorial plane is within a range of 3 % to 20%. If so, the advantage according to claim 1 can be further easily exhibited.

According to the invention claimed in claim 4, if a radius of curvature of an outer contour of a shoulder section adjacent to the tread section on the higher negative ratio side is Ra, and on the lower negative ratio side Rb, Ra and Rb satisfy a relationship of Ra>Rb.

The shoulder part means a tire part on the surface of the tire a distance of which part from the tire equatorial plane is within a predetermined range whichever the IN side or the OUT side. This predetermined range is a range from 1/2 of the distance from the tire equatorial plane to a tread end to 1.4 times as large as the distance from the tire equatorial plane to the tread end. The tread end signifies an outermost grounding part in a tire width direction when the pneumatic tire is attached to a standard rim specified in JATMA YEAR BOOK (2002 Edition, Japan Automobile Tire Manufacturers Association, Inc.), an internal pressure that is 100% of an air pressure (maximum air pressure) corresponding to a maximum load capability at an applied size ply rating in the JATMA YEAR BOOK (bold load in an internal pressure-load capability correspondence table) is filled into the tire, and the maximum load capability is applied in a flat pressing state (a state without a camber angle). If TRA standards or ETRTO standards are applied at a location where the tire is used or where the tire is manufactured, the tire is made conformable to the standards.

According to the invention claimed in claim 4, when the pneumatic tire is attached to the automobile so that the higher negative ratio side becomes the IN side, the radius of curvature of the outer contour of the shoulder section on the IN side is large. Due to this, it is advantageously possible to relax concentration of a stress on a sidewall section on the IN side on which the load during a high-speed rolling is higher than the OUT side due to application of the negative camber angle, and prevent a locally large strain and eventually breaking of the tire.

According to the invention claimed in claim 5, Ra and Rb satisfy a relationship of $1.2 < Ra/Rb < 2.5$.

It is thereby possible to enhance all of the high-speed durability, the steering stability, and the belt end separation.

According to the invention claimed in claim 6, the tread section includes a plurality of width-direction grooves extending in a tire width direction, and if a circumferential average pitch of the width-direction grooves on the higher negative ratio side is Pa and on the lower negative ratio side Pb, Pa and Pb satisfy a relationship of Pa>Pb.

It is thereby possible to increase a lateral rigidity of an OUT-side block and increase a circumferential rigidity of an IN-side block. As a result, it is possible to allow the OUT-side block to play a role of generating a high lateral force during cornering and the IN-side block to play a role of generating a high driving force and a high braking force during straight running, and to further enhance the steering stability.

According to the invention claimed in claim 7, Pa and Pb satisfy a relationship of $1/2 \leq Pb/Pa \leq 2/3$. This can facilitate exhibiting the advantage according to claim 6.

According to the invention claimed in claim 8, a reinforcing layer is provided on the shoulder section on the higher negative ratio side. This can make it difficult to cause a belt end separation in the shoulder section on the higher negative ratio side. It is, therefore, possible to further enhance the durability of the pneumatic tire.

According to the invention claimed in claim 9, a reinforcing layer is provided on the shoulder section on the lower negative ratio side.

The pneumatic tire according to the present invention has the offset belt widths as set forth in claim 1. For this reason, the lower negative ratio side is heavier than the higher negative ratio side. By providing the reinforcing layer on the shoulder part on the lower negative ratio side, an increase in diameter due to rolling can be suppressed, which can thereby enhance the high-speed durability and the steering stability.

According to the invention claimed in claim 10, reinforcing layers are provided on shoulder sections on both the higher negative ratio side and the lower negative ratio side, and a tensile rigidity of a cord of the reinforcing layer provided on the lower negative ratio side is higher than a tensile rigidity of a cord of the reinforcing layer provided on the higher negative ratio side.

By doing so, if the reinforcing layers are provided on both the shoulder part on the higher negative ratio side and the shoulder part on the lower negative ratio side, the tensile rigidities of the reinforcing layers can be set into favorable states, respectively.

According to the invention claimed in claim 11, a tread rubber that constitutes the tread section is formed of different rubber materials on the higher negative ratio side to the lower negative ratio side, the rubber material on the higher negative ratio side is higher in modulus of rigidity than the rubber material on the lower negative ratio side, and the rubber material on the lower negative ratio side is higher in tan$\delta$ than the rubber material on the higher negative ratio side.

Since the pneumatic tire attached to the automobile has a greater shearing deformation on the vehicle interior side (IN side) than that on the vehicle exterior side (OUT side), the higher modulus of rigidity G is preferable. Further, since a grounding pressure on the OUT side is lower than that on the IN side and slippage of the pneumatic tire on the road tends to occur to the OUT side more frequently than the IN side, the higher tan$\delta$ is preferable.

Accordingly, by attaching the pneumatic tire according to the invention claimed in claim 1, 1 to the automobile so that the higher negative ratio side becomes the IN side and the lower negative ratio side becomes the OUT side, the high-speed durability and the steering stability of the pneumatic tire can be enhanced.

According to the invention claimed in claim 12, if a width from the tire equatorial plane to an edge of the tread on the higher negative ratio side is Wa and on the lower negative ratio side Wb, Wa and Wb satisfy a relationship of Wa<Wb.

By thus narrowing the tread width on the lower negative ratio side, left and right weight balances with respect to the tire equatorial plane are made uniform, and the increase in diameter due to the rolling can be suppressed on the lower negative ratio side.

According to the invention claimed in claim 13, a skid base gauge that is a distance from a bottom of the grooves to an outermost layer of the belt on the higher negative ratio side is Ha and on the lower negative ratio side Hb, Ha and Hb satisfy a relationship of Ha>Hb.

By thus increasing the skid base gauge on the higher negative ratio side, a tensile force of the belt is increased and a hoop effect is increased. It is, therefore, possible to suppress the shoulder section from projecting.

BRIEF DESCRIPTION OF THE DRAWINGS

Fig. 1 is a partial cross-sectional view of a pneumatic tire according to one embodiment of the present invention.
Fig. 2 is a partial plan view of the pneumatic tire according to the one embodiment of the present invention.
Fig. 3 is a partial cross-sectional view of the pneumatic tire according to the one embodiment of the present invention.
Fig. 4 is a plan view that depicts a grounding plane of the pneumatic tire according to the one embodiment of the present invention.
Fig. 5 is a partial cross-sectional view that depicts a modification of the pneumatic tire according to the one embodiment of the present invention.
Fig. 6 is a cross-sectional view that depicts another modification of the pneumatic tire according to the one embodiment of the present invention.
Fig. 7 is a graph that depicts a result of conducting a first experiment (high-speed durability test) to the pneumatic tire according to the first embodiment.

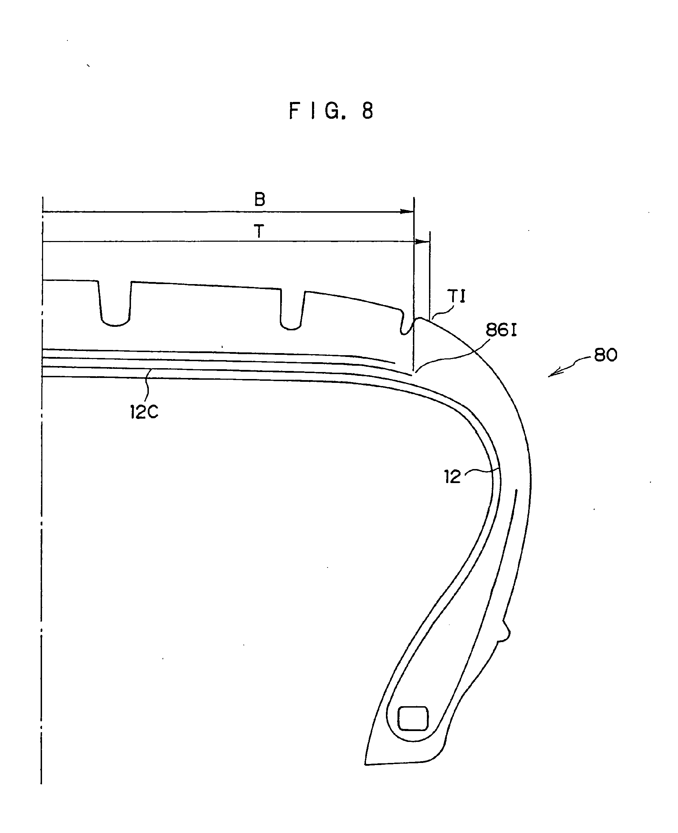

Fig. 8 is a partial cross-sectional view of a conventional pneumatic tire.

BEST MODE FOR CARRYING OUT THE INVENTION

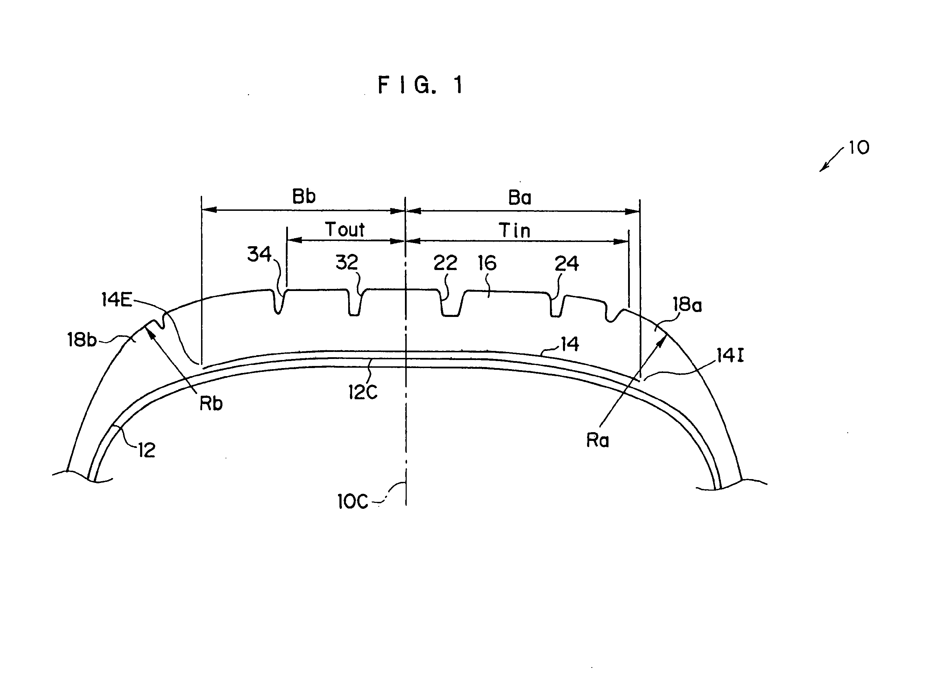

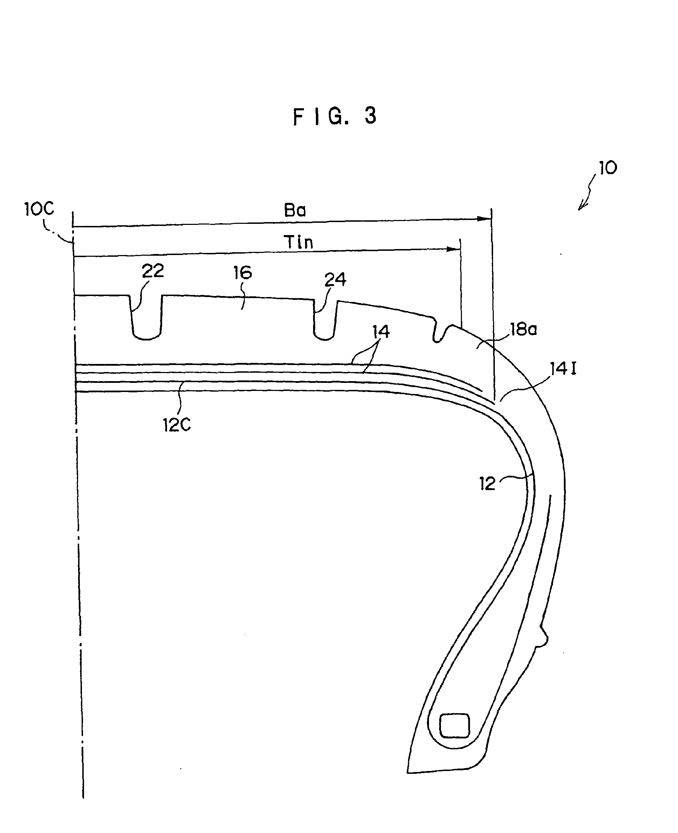

A mode for carrying out the present invention will be described hereinafter while referring to an embodiment. As shown in Figs. 1 to 3, a pneumatic tire 10 according to one embodiment of the present invention includes a belt 14 and a tread section 16 provided with grooves, outside of a crown part 12C of a carcass 12 that extends in a toroidal fashion.

The carcass 12 is provided with codes arranged in a direction substantially perpendicular to the circumferential direction thereof, that is, radially arranged. The belt 14 is typically structured by plural (for example, two) belt plies.

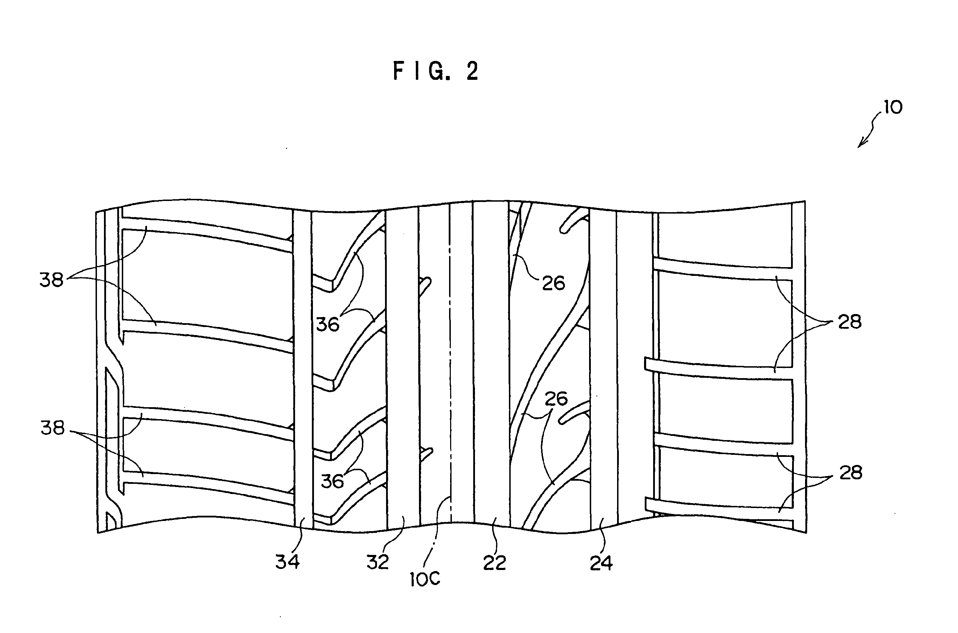

Both sides of an equatorial plane 10C of the pneumatic tire 10 differ in negative ratio of the tread section 16. In Figs. 1 and 2, a right side of the equatorial plane 10C is higher in negative ratio than a left side thereof.

When the pneumatic tire 10 is attached to an automobile, the tire 10 is attached so that the side having the higher negative ratio (right side of the equatorial plane 10C in Fig. 2) is located on an IN side (a vehicle interior side) and the side having the lower negative ratio is located on an OUT side (vehicle exterior side). In this embodiment, therefore, the right side of the equatorial plane 10C is referred to as "IN side" and the left side thereof is referred to as "OUT side" in Figs. 1 to 3.

A belt width Ba from an IN-side belt end 14I to the equatorial plane 10C and a belt width Bb from an OUT-side belt end 14E to the equatorial plane 10C have a relationship of Ba>Bb. In this way, the belt width Ba on the IN side having the higher negative ratio is larger than the belt width Bb on the OUT side having the lower negative ratio, that is, the IN side has the larger belt width. It is preferable to satisfy $1.04 \leq Ba/Bb \leq 1.20$.

The belt width Ba on the IN side is set so that the IN-side belt end 14I is located outward of an outer end of a grounding width Tin when the pneumatic tire 10 is attached to the automobile with a negative camber angle applied thereto.

Further, a radius of curvature Ra of an outer contour of an IN-side shoulder section 18a and a radius of curvature Rb of an outer contour of an OUT-side shoulder section 18b satisfy a relationship of Ra>Rb, and the radius of curvature Rb is set to be the same as the conventional one. It is thereby advantageously possible to relax concentration of a stress on a sidewall section on the IN side on which a load during a high-speed rolling is higher than the OUT side due to application of the negative camber angle, and prevent a locally large strain and eventually breaking of the tire. It is noted that the shoulder section 18a is a tire part which length from the equatorial plane 10C of the tire surface is within Wa/2 to 1.4 Wa, and that the shoulder section 18b is a tire part which length from the equatorial plane 10C of the tire surface is within Wb/2 to 1.4 Wb.

On the IN side of the tread section 16, two main grooves 22 and 24 along a circumferential direction of the tire 10, inclined grooves 26 provided between the main grooves 22 and 24, and lug grooves 28 formed outside of the main groove 24 are provided. Likewise, on the OUT side of the tread section 16, two main grooves 32 and 34, inclined grooves 36 provided between the main grooves 32 and 34, and lug grooves 38 formed outside of the main groove 34 are provided.

A circumferential average pitch Pa of the lug groove 28 and a circumferential average pitch Pb of the lug groove satisfy a relationship of preferably Pa>Pb, more preferably $1/2 \leq Pb/Pa \leq 2/3$. It is thereby possible to increase a lateral rigidity of an OUT-side block and increase a circumferential rigidity of an IN-side block. As a result, it is possible to allow the OUT-side block to play a role of generating a high lateral force during cornering and the IN-side block to play a role of generating a high driving force and a high braking force during straight running, and to further enhance the steering stability.

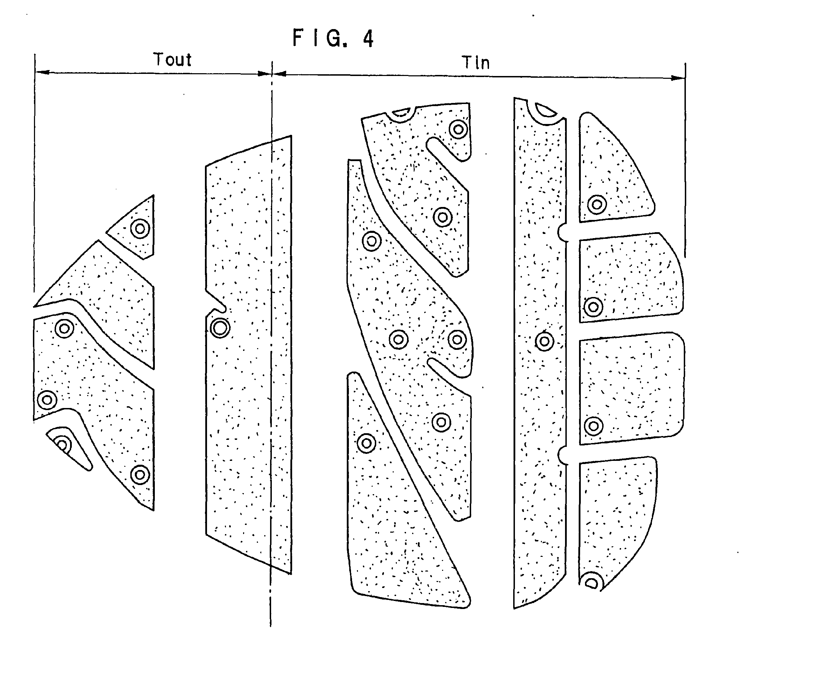

By attaching the pneumatic tire 10 according to this embodiment to the automobile, a projection generated by a centrifugal force during high-speed rolling can be efficiently suppressed. Due to this, even if a load input is particularly increased on the IN side following the application of the negative camber angle, a strain and a heat generated in a rubber member of the IN-side shoulder section 18a can be efficiently reduced and the high-speed durability can be efficiently enhanced. Further, by ensuring that the grounding width Tout on the OUT side (see Figs. 1 and 4) is the same as that according to the conventional art, the deterioration in the steering stability can be prevented.

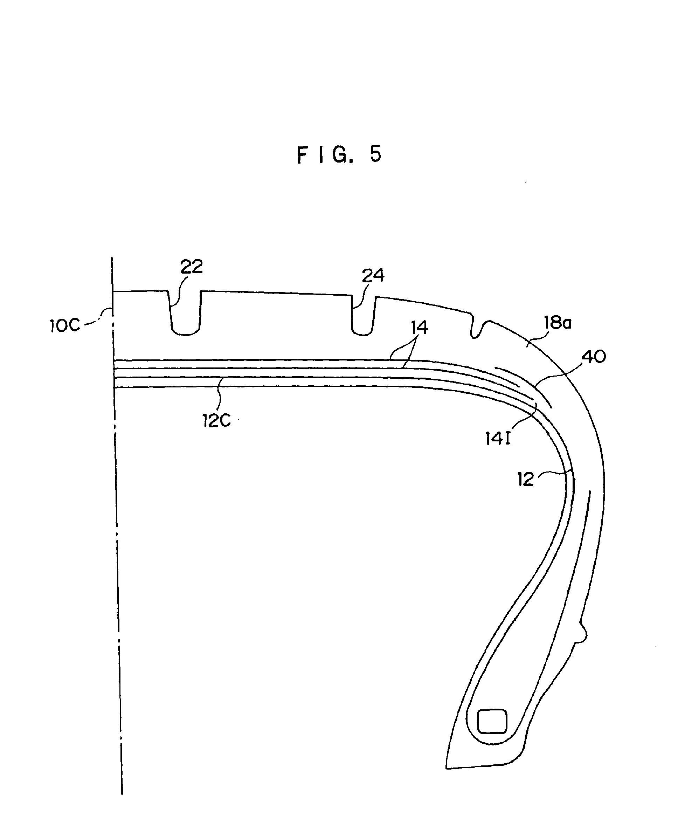

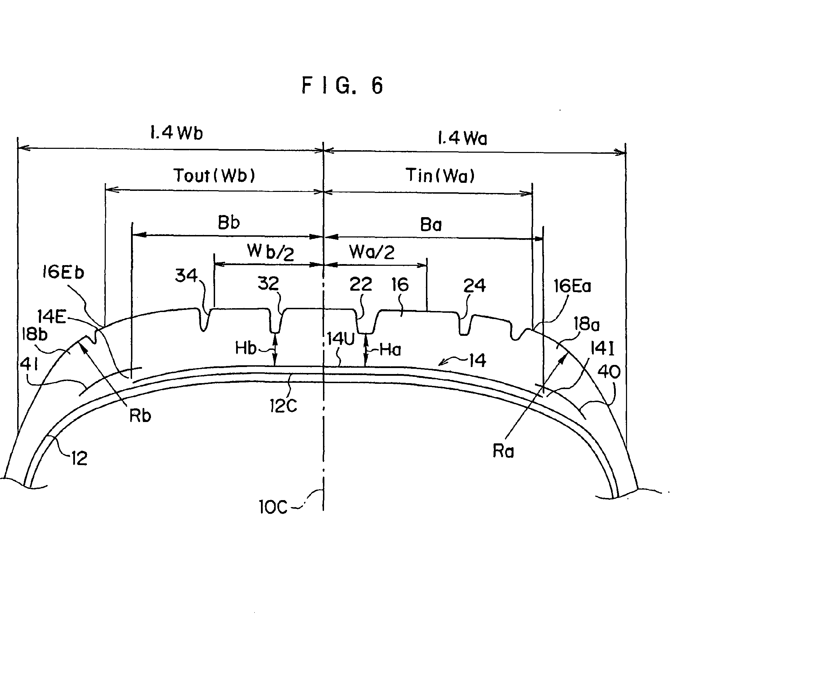

As shown in Fig. 5, a reinforcing layer 40 may be provided on the IN-side shoulder section 18a having the higher negative ratio. By providing the reinforcing layer 40, it is difficult to cause a belt end separation in the IN-side shoulder section 18a, and the high-speed durability of the shoulder section 18 can be thereby further enhanced. As shown in Fig. 6, a reinforcing layer 41 may be provided on the OUT-side shoulder section 18b having the lower negative ratio. By providing the reinforcing layer 41, an increase in diameter due to rolling can be suppressed on the OUT-side shoulder section 18b, and the high-speed durability and the steering stability can be thereby further enhanced. Further, the widths from the equatorial plane 10C to the tread ends 16Ea and 16Eb (see Fig. 6) may satisfy a relationship of Wa being larger than Wb where Wa denotes the width on the higher negative ratio side and Wb denotes the width on the lower negative ratio side. By so setting, weight balance between right and left tire portions across the equatorial plane 10C can be equalized, and therefore, the increase in diameter due to rolling on the lower negative ratio side can be suppressed. Besides, if skid base gauges that are a distance from a bottom of the groove 22, 24 (or the groove 32, 34) to an outermost layer 14U of a belt 14 are Ha on the high negative ratio side and Hb on the lower negative ratio side, Ha may be larger than Hb. By doing so, a tensile force on the higher negative ratio side is increased and a hoop effect is increased, and it is thereby possible to suppress the shoulder section 18a from projecting.

<First Experimental Example (Experimental Example about High-Speed Durability)>

A negative camber angle-added high-speed durability drum test is conducted to the above-described pneumatic tire 10 under the following conditions.

Tire size: 225/45ZR1791Y
Rim: 8Jx17 (standard rim specified by ETRTO Standards)
Load: 530 kg (maximum allowable load specified by ETRTO Standards x 86%)
Internal pressure: 320 kPa
Camber angle: -4° (negative camber)
Drum diameter: 3 m
Speed: After running at 210 km/h for 60 minutes, speed is accelerated by 10 km/h per 10 minutes.

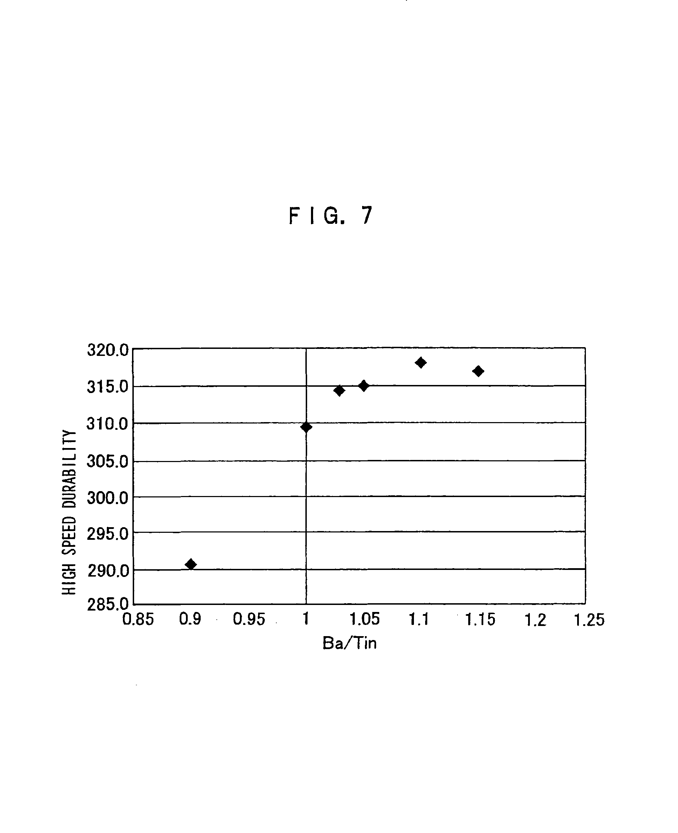

An experimental result is shown in Fig. 7. In Fig. 7, on the assumption that a failure occurs at a speed 220 km/h or more, the speed at which a failure occurs plus a passing time (in minutes) at the speed is used as a durability for convenience's sake (e.g., when a failure occurs after passage of four minutes at the running speed of 290 km/h, the durability is indicated as 294).

As evident from Fig. 7, if the belt width Ba (see Fig. 2) on the IN side on which the load on the tire is higher is about 1.0 time or more as large as the grounding width Tin (see Figs. 1 and 4), the durability is sufficiently enhanced. In addition, it is estimated that the effect of enhancing the durability is further improved until the belt width Ba is about 1.1 times as large as the grounding width Tin.

For the pneumatic tire plotted in Fig. 7, examples of values such as the belt widths Ba and Bb and the grounding widths Tin and Tout are shown in Table 1.

[Table 1]

|  | Tire according to the present invention | Conventional tire |
|---|---|---|
| Tin (mm) | 93.6 | 95.4 |
| Ba (mm) | 96.8 | 85.8 |
| Ba/Tin | 1.03 | 0.90 |
| Tout (mm) | 54.5 | 55.5 |
| Bb(mm) | 86.8 | 85.8 |
| Bb/Tout | 1.59 | 1.55 |
| IN-side negative ratio (%) | 38 | 38 |
| OUT-side negative ratio (%) | 33 | 33 |
| Negative ratio difference (%) between IN-side and OUT-side | 5 | 5 |
| Belt width ratio (Ba/Bb) of IN side to OUT side | 1.12 | 1.10 |

Further, a high-speed durability test is conducted to the conventional pneumatic tire under the same experimental conditions. For the conventional pneumatic tire, values such as the belt widths Ba and Bb, and the grounding widths Tin and Tout are also shown in Table 1.

The experiment shows the following respects. By setting the IN-side belt width Ba within a predetermined range, (1) it is possible to effectively reduce the strain of the rubber and the projection due to the centrifugal force on the belt ends and to suppress the failure due to heating, and (2) the decrease in the grounding width is limited to the IN side and the excessive increase in the belt width is avoided, whereby a decrease in the IN-side grounding width can be minimized and the steering stability of the pneumatic tire equivalent to that of the conventional pneumatic tire can be ensured.

Furthermore, while a ratio of the negative ratios is set constant (1.5) and Ba/Bb is changed as a parameter, a high-speed durability test is conducted to the pneumatic tire according to the present invention under the same experimental conditions as those stated above.

While setting the durability of the conventional pneumatic tire at 100, the durability of the pneumatic tire according to the present invention is evaluated. Table 2 depicts an evaluation result. In Table 2, a higher numeric value indicates a higher evaluation.

[Table 2]

| | Tire according to the present invention | | | | | Conventional tire |
|---|---|---|---|---|---|---|
| | Example 1 | Example 2 | Example 3 | Example 4 | Example 5 | |
| In/out (Ba/Bb) | 1.02 | 1.04 | 1.10 | 1.20 | 1.22 | 1.00 |
| High-speed durability (with camber) | 101 | 103 | 104 | 104 | 104 | 100 |
| Steering stability (on DRY road) | 100 | 100 | 102 | 100 | 99 | 100 |
| Belt end separation performance | 100 | 100 | 100 | 100 | 98 | 100 |

As seen from Table 2, the high-speed durability of the pneumatic tire according to any of the first to the fifth examples of the present invention is enhanced from that of the conventional pneumatic tire.

<Second Experimental Example (Experimental Example about Steering Stability)>

Using the pneumatic tires having the same negative ratios according to the first to the fifth examples of the present invention shown in Table 2, a test about the steering stability of the pneumatic tire is conducted as follows.
The automobile is made to actually run in a test course on a dry road including a high-speed circuit with a long straight part, a handling evaluation road having many course-restricted curves and the like in a wide speed range from a low speed to a high speed of about 180 km/h. A straight running stability, a handle response during steering, a gripping performance on the road, and the like are evaluated by driver's feeling. Also in this experiment, the steering stabilities of the pneumatic tire according to the first to the fifth examples of the present invention are compared with respect to the steering stability of the conventional pneumatic tire which is set at 100, and evaluated. An evaluation result is depicted in Table 2.
As evident from Table 2, when the belt width ratio Ba/Bb of the IN side to the OUT side is within 1.0 to 1.10, the steering stability is not at all deteriorated. When the belt width ratio Ba/Bb is 1.10, the steering stability is enhanced. When the belt width ratio Ba/Bb is 1.20 (for the pneumatic tire according to the fourth example) and 1.22 (for the pneumatic tire according to the fifth example), the deteriorations in the steering stabilities are within a practical range.

<Third Experimental Example (Experimental Example about Durability of Belt End Separation)>

Using the pneumatic tires according to the first to fifth examples of the present invention as shown in Table 2, a test for evaluating a durability of the belt end separation is conducted. Also in this experiment, the pneumatic tires according to the first to fifth examples of the present invention are compared with the conventional pneumatic tire, the experimental result of which is set to 100, and evaluated. An evaluation result is depicted also in Table 2. When a ratio of the negative ratios is within 1.0 to 1.1, the durability of the belt end separation is not deteriorated. When Ba/Bb is 1.20 (for the pneumatic tire according to the fourth example), the deterioration in durability of the belt end separation is within an allowable range. Even at Ba/Bb of 1.22 (for the pneumatic tire according to the fifth example), the deterioration in durability of the belt end separation is within a practical range.

<Fourth Experimental Example (Experimental Example about Radius of Curvature of Shoulder Section)>

In this experimental example, using pneumatic tires according to sixth to tenth examples in which Ra/Rb values are changed with respect to those of the pneumatic tires according to the first to the fifth examples as parameters, a test for evaluating the high-speed durability, the steering stability, and the durability of the belt end separation is similarly conducted. Table 3 depicts test conditions and an evaluation result.

[Table 3]

| | Example 6 | Example 7 | Example 8 | Example 9 | Example 10 |
|---|---|---|---|---|---|
| In/out (Ba/Bb) | 1.10 | 1.10 | 1.10 | 1.10 | 1.10 |
| Ra/Rb | 1.1 | 1.2 | 1.8 | 2.5 | 2.7 |

[Table 3] (continued)

|  | Example 6 | Example 7 | Example 8 | Example 9 | Example 10 |
|---|---|---|---|---|---|
| High-speed durability | 104 | 105 | 107 | 109 | 109 |
| Steering stability | 102 | 102 | 104 | 103 | 101 |
| Belt end separation performance | 100 | 100 | 102 | 104 | 105 |

As evident from Table 3, as the Ra/Rb value is made higher than 1.0, the high-speed durability and the durability of the belt end separation are enhanced. When the Ra/Rb value is higher than 1.0, the steering stability of the pneumatic tire according to any of the evaluation results is enhanced. The durability of the belt end separation at Ra/Rb of 2.7 is higher than that at Ra/Rb of 2.5. However, the steering stability at Ra/Rb of 2.7 is slightly lower than that at Ra/Rb of 2.5.

<Fifth Experimental Example (Experimental Example about Circumferential Pitch)>

In this experimental example, using pneumatic tires according to eleventh to fifteenth examples in which Pb/Pa values are changed with respect to those of the pneumatic tires according to the sixth to tenth examples as parameters, a test for evaluating the high-speed durability, the steering stability, and the durability of the belt end separation is similarly conducted. Table 4 depicts test conditions and an evaluation result.

[Table 4]

|  | Example 11 | Example 12 | Example 13 | Example 14 | Example 15 |
|---|---|---|---|---|---|
| In/out (Ba/Bb) | 1.10 | 1.10 | 1.10 | 1.10 | 1.10 |
| Ra/Rb | 1.8 | 1.8 | 1.8 | 1.8 | 1.8 |
| Pb/Pa | 0.4 | 1/2 | 0.6 | 2/3 | 0.7 |
| High-speed durability | 100 | 103 | 105 | 105 | 105 |
| Steering stability | 109 | 109 | 107 | 106 | 105 |
| Belt end separation performance | 102 | 102 | 102 | 102 | 102 |

As evident from Table 4, when the Pa/Pb value is made lower than 1.0, the high-speed durability, the steering stability, and the durability of the belt end separation are all enhanced according to the twelfth to fifteenth examples. According to the eleventh example, the high-speed durability is the same as that of the conventional pneumatic tire, and the steering stability and the durability of the belt end separation are enhanced.
According to the fifteenth example in which the Pa/Pb is 0.7, the steering stability is slightly lower than that according to the fourteenth example.

<Sixth Experimental Example (Experimental Example about Providing Reinforcing Layer on Shoulder Section)>

In this experimental example, using pneumatic tires according to sixteenth to twentieth examples in each of which a reinforcing layer is provided on the shoulder section comparing to the pneumatic tires according to the eleventh to fifteenth examples, a test for evaluating the high-speed durability, the steering stability, and the durability of the belt end separation is similarly conducted. Table 5 depicts test conditions and an evaluation result.

[Table 5]

|  | Example 16 | Example 17 | Example 18 | Example 19 | Example 20 |
|---|---|---|---|---|---|
| In/out (Ba/Bb) | 1.10 | 1.10 | 1.10 | 1.10 | 1.10 |
| Ra/Rb | 1.8 | 1.8 | 1.8 | 1.8 | 1.8 |
| Pb/Pa | 0.6 | 0.6 | 0.6 | 0.6 | 0.6 |
| High-speed durability | 105 | 106 | 106 | 106 | 107 |
| Steering stability | 107 | 108 | 108 | 109 | 108 |

[Table 5]   (continued)

|  | Example 16 | Example 17 | Example 18 | Example 19 | Example 20 |
|---|---|---|---|---|---|
| Belt end separation performance | 104 | 100 | 104 | 104 | 104 |

As evident from Table 5, according to the sixteenth example in which the reinforcing layer is provided on the higher negative ratio side, the durability of the belt end separation is greatly enhanced. According to the seventeenth example in which the reinforcing layer is provided on the lower negative ratio side, the high-speed durability and the steering stability are greatly enhanced. According to the eighteenth example in which reinforcing layers are provided on both sides, respectively, the high-speed durability, the steering stability, and the durability of the belt end separation are all enhanced.

Furthermore, for a tread rubber that constitutes the tread section 16, according to the nineteenth example in which a tread rubber that has a higher modulus of rigidity G than that of the tread rubber for the conventional case on the higher negative ratio side and that has a higher tanδ than that of the tread rubber for the conventional case on the lower negative ratio side is used, the steering stability is further enhanced as compared with the eighteenth example.

For the widths from the equatorial plane 10C to the tread ends 16Ea and 16Eb (see Fig. 6), according to the twentieth example in which the width Wa on the higher negative ratio side is larger than the width Wb on the lower negative ratio side, the high-speed durability is further enhanced as compared with the eighteenth example.

The mode for carrying out the present invention has been described while referring to the embodiment. However, the embodiment is shown only for illustrative purposes and the present invention can be changed and modified within a range of the scope of the invention. Needless to say, the scope of the invention is not limited to the above-stated embodiment.

INDUSTRIAL APPLICABILITY

As stated so far, the pneumatic tire according to the present invention is suitably used as the pneumatic tire having the enhanced high-speed durability without deterioration in steering stability. For example, the pneumatic tire according to the present invention is suitably applied to the automobile or the like so that the higher negative ratio side becomes the IN side and that the lower negative ratio side becomes the OUT side.

**Claims**

1. A pneumatic tire sequentially including on an outside of a crown part of a carcass extending in a toroidal fashion a belt and a tread section, which is provided with grooves, and having different negative ratios of the tread section on each of two sides of a tire equatorial plane, wherein
   a belt width Ba from a belt end on the higher negative ratio side to the tire equatorial plane and a belt width Bb from a belt end on the lower negative ratio side to the tire equatorial plane satisfy a relationship of:

$$Ba > Bb.$$

2. The pneumatic tire according to claim 1, wherein
   the belt width Ba and the belt width Bb satisfy a relationship of:

$$1.04 \leq Ba/Bb \leq 1.20.$$

3. The pneumatic tire according to claim 1 or 2, wherein
   a difference between the negative ratios on each side of the tire equatorial plane is within a range of 3% to 20%.

4. The pneumatic tire according to any one of claims 1 to 3, wherein
   if a radius of curvature of an outer contour of a shoulder section adjacent to the tread section on the higher negative ratio side is Ra, and on the lower negative ratio side Rb, Ra and Rb satisfy a relationship of:

$$Ra>Rb.$$

5. The pneumatic tire according to claim 4, wherein
Ra and Rb satisfy a relationship of:

$$1.2<Ra/Rb<2.5.$$

6. The pneumatic tire according to any one of claims 1 to 5, wherein
the tread section includes a plurality of width-direction grooves extending in a tire width direction, and
if a circumferential average pitch of the width-direction grooves on the higher negative ratio side is Pa and on the lower negative ratio side Pb, Pa and Pb satisfy a relationship of:

$$Pa>Pb.$$

7. The pneumatic tire according to claim 6, wherein
Pa and Pb satisfy a relationship of:

$$1/2 \leq Pb/Pa \leq 2/3.$$

8. The pneumatic tire according to any one of claims 1 to 7, wherein
a reinforcing layer is provided on a shoulder section on the higher negative ratio side.

9. The pneumatic tire according to any one of claims 1 to 8, wherein
a reinforcing layer is provided on a shoulder section on the lower negative ratio side.

10. The pneumatic tire according to any one of claims 1 to 7, wherein
reinforcing layers are provided on shoulder sections on both the higher negative ratio side and the lower negative ratio side, and
a tensile rigidity of a cord of the reinforcing layer provided on the lower negative ratio side is higher than a tensile rigidity of a cord of the reinforcing layer provided on the higher negative ratio side.

11. The pneumatic tire according to any one of claims 1 to 10, wherein
a tread rubber that constitutes the tread section is formed of different rubber materials on the higher negative ratio side to the lower negative ratio side,
the rubber material on the higher negative ratio side is higher in modulus of rigidity than the rubber material on the lower negative ratio side, and
the rubber material on the lower negative ratio side is higher in tanδ than the rubber material on the higher negative ratio side.

12. The pneumatic tire according to any one of claims 1 to 11, wherein
if a width from the tire equatorial plane to an edge of the tread on the higher negative ratio side is Wa and on the lower negative ratio side Wb, Wa and Wb satisfy a relationship of:

$$Wa<Wb.$$

13. The pneumatic tire according to any one of claims 1 to 12, wherein
a skid base gauge that is a distance from a bottom of the grooves to an outermost layer of the belt on the higher negative ratio side is Ha and on the lower negative ratio side Hb, Ha and Hb satisfy a relationship of:

$$Ha>Hb.$$

# FIG. 1

EP 1 586 466 A1

F I G. 2

# F I G. 3

F I G. 4

EP 1 586 466 A1

F I G. 5

# FIG. 6

EP 1 586 466 A1

# F I G. 7

FIG. 8

## INTERNATIONAL SEARCH REPORT

| International application No. |
|---|
| PCT/JP03/15807 |

**A. CLASSIFICATION OF SUBJECT MATTER**
Int.Cl⁷ B60C11/03, B60C11/04, B60C9/30, B60C11/01, B60C11/00

According to International Patent Classification (IPC) or to both national classification and IPC

**B. FIELDS SEARCHED**

Minimum documentation searched (classification system followed by classification symbols)
Int.Cl⁷ B60C1/00-19/12

Documentation searched other than minimum documentation to the extent that such documents are included in the fields searched
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 7-223407 A (Bridgestone Corp.),<br>22 August, 1995 (22.08.95),<br>Claims; Par. No. [0011]; Fig. 2<br>(Family: none) | 1-3,12<br>4-11,13 |
| Y | JP 3-271003 A (Bridgestone Corp.),<br>03 December, 1991 (03.12.91),<br>Claims; Fig. 1<br>(Family: none) | 4,5 |
| Y | JP 2001-354010 A (Bridgestone Corp.),<br>25 December, 2001 (25.12.01),<br>Claims; drawings<br>(Family: none) | 6,7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March, 2004 (02.03.04) | 16 March, 2004 (16.03.04) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| | International application No. |
|---|---|
| | PCT/JP03/15807 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-225511 A  (The Yokohama Rubber Co., Ltd.), 14 August, 2002 (14.08.02), Claims; Par. No. [0023]; Fig. 4 (Family: none) | 8-10 |
| Y | JP 11-321231 A  (Toyo Tire and Rubber Co., Ltd.), 24 November, 1999 (24.11.99), Claims; drawings (Family: none) | 9 |
| Y | JP 64-67404 A  (The Yokohama Rubber Co., Ltd.), 14 March, 1989 (14.03.89), Claims; page 2, lower left column, line 4 to lower right column, line 7 (Family: none) | 11 |
| Y | Microfilm of the specification and drawings annexed to the request of Japanese Utility Model Application No. 182419/1981(Laid-open No. 85507/1983) (Nissan Motor Co., Ltd.), 10 June, 1983 (10.06.83), Claims; Figs. 3, 4 (Family: none) | 13 |

Form PCT/ISA/210 (continuation of second sheet) (July 1998)